# EUROPEAN PATENT SPECIFICATION

(11) **EP 3 153 358 B1**
(45) Date of publication and mention of the grant of the patent: **29.08.2018**
(21) Application number: 15189165.2
(22) Date of filing: 09.10.2015
(51) Int. Cl.: B60R 22/34

(54) **SEATBELT RETRACTOR WITH A LOAD LIMITING FUNCTION**
GURTAUFROLLER MIT KRAFTBEGRENZUNGSFUNKTION
RÉTRACTEUR DE CEINTURE DE SÉCURITÉ AVEC UNE FONCTION DE LIMITATION DE CHARGE

(43) Date of publication of application: 12.04.2017
(73) Proprietor: Autoliv Development AB, 447 83 Vårgårda (SE)
(72) Inventor: SVENSSON, Robert Per Ove, 51332 Fristad (SE); JOHANSSON, Claes Erik, 44334 Lerum (SE); MATHIASSON, Elias, 44192 Alingsås (SE); LUCHT, Andreas, 25358 Horst (DE); SÜLLAU, Patrick, 24558 Henstedt-Ulzburg (DE)
(74) Representative: Müller Verweyen

(56) References cited:
- DE-A1- 19 640 842
- DE-A1- 19 927 731
- US-A1- 2012 234 958

## Description

The invention relates to a seatbelt retractor with a load limiting function comprising the features of the preamble of claim 1.

A generic seatbelt retractor is known for example from DE 199 27 427 C2. The seatbelt retractor has a two-stage load limiting system in which the load limitation level can be switched from a high load limitation level to a low load limitation level. The load limiting device further includes a torque tube between the belt shaft and the load limiting device designed as a torsion bar, which torque tube is releasably locked in relation to the belt shaft. When the torque tube is released the load limitation level is switched from the high level to the low level.

From DE 10 2007 057 661 A1, a seatbelt retractor having the same configuration is known, in which a third load limiting element is formed by a bending wire located parallel to the belt shaft. The contribution of the third load limiting element to the load limitation characteristic is effected by the bending wire being wound around the axis of a torsion bar at the same time being plastically deformed out of the parallel alignment to the belt shaft. Thus, an installation space needs to be provided in the seatbelt retractor suitable for mounting the bending wire prior to deformation as well as after deformation. Furthermore, the load limitation level to be realized by the third load limiting element is limited by the plastic deformation energy of the bending wire and can only be increased by enlarging the bending wire itself. As, according to today's requirements of the vehicle manufacturers, seatbelt retractors shall be designed to be as small as possible, it might be difficult for installation space reasons to achieve the required load limitation characteristic with this solution.

All of the described load limitation systems use plastically deformable parts, which define the load limiting characteristic and the load limiting level by their plastic deformation characteristics and the sequence of their activation. When the seatbelt retractor with the load limiting system shall be designed for a different load limiting level or a different load limiting characteristic, the plastically deformable parts need to be therefore exchanged against load limiting parts having a different deformation level, or they need to be activated in different sequences, which both means essential modifications in the design. When the design is fixed and the plastically deformable parts are chosen, the load limiting characteristic as well as the load limiting level may not be changed anymore.

Furthermore, seatbelt retractors having an electric motor for a reversible pre-pretensioning function are known. The electric motor is activated in a pre-crash situation for tensioning the seatbelt and coupling the occupant closer to the vehicle. In case no real crash occurs afterwards, the electric motor is deactivated and the seatbelt retractor may be used afterwards according to his normal function. The electric motor is coupled via a clutch with the belt shaft and drives the belt shaft in winding direction during the activation.

In the DE 197 31 689 A1, it is suggested to use the electric motor additionally for the load limiting function. The electrie motor is coupled via a gear mechanism and a clutch with the belt shaft and is driven by the belt shaft in unwinding direction during the load limiting phase. The clutch is triggered by an external signal and is designed to transmit different torques to realize also a comfort function and the pre-pretensioning function. Another example of a seatbelt retractor with an electric motor is disclosed in DE 19640842 A1.

It is the object of the invention to provide a seatbelt retractor with a load limiting function having a load limiting device and an electric motor which may be used for the load limiting function with an easy design for a maximum predetermined load limiting level.

For the solution of the object, it is suggested that at least one energy absorbing element is provided in the force flow between the housing and the belt shaft, which is loaded when the clutch is closed during the load-limited belt webbing extraction in parallel to the load limiting device for increasing the load limiting level.

The advantage of the suggested solution is that the load limiting level and the load limiting characteristic may be adapted to a predetermined value and course by closing the clutch and adding the additional load limiting level caused by the energy absorbing element. The energy absorbing element is only activated when the clutch is closed, so it is especially possible to realize at least two different load limiting levels, one load limiting level caused by the load limiting device and one load limiting level caused by the addition of the load limiting level of the load limiting device and the energy absorbing element.

Furthermore, it is suggested that an electric actuator, preferably an electric motor, is provided which closes the clutch when activated. The electric actuator or the electric motor enables an active triggering of the closing and opening of the clutch and therefore an active control of the load limiting level.

The clutch is preferably closed by friction created by a relative movement, which is initiated by the activation of the electric actuator. The relative movement may be a movement between a drive wheel, which is driven by the electric actuator, and a fixed wall of the housing or a surface of the belt shaft or a surface of a part connected with the belt shaft. The friction forces to close the clutch may be additionally supported by inertia forces for example of clamping elements or locking pawls, which are arranged for example at the drive wheel or at a part driven by the drive wheel.

Furthermore, it is suggested that the clutch is a one direction clutch which provides a support for the energy absorbing element only when the belt shaft is rotating in unwinding direction of the webbing. The advantage of this solution is that the energy absorbing element therefore may only be activated under two conditions. The first condition is that the clutch needs to be closed and the second condition is that the belt shaft needs to turn in unwinding direction like in the load limiting phase. Therefore, it can be prevented that the energy absorbing element is activated unintentionally and it does not disturb the rotational movement during normal use.

The relative movement for closing the clutch is preferably a rotational movement of a drive wheel driven by the electric actuator in a direction which would result in an upwinding rotational movement of the belt shaft when the clutch is closed. The advantage of this embodiment is that the clutch can be designed as a clutch which is also closed during the pre-pretensioning and therefore can also be used to transmit the torque during the pre-pretensioning. The electric actuator is in this case preferably an electric motor, which drives the drive wheel to a rotational movement which is transmitted via the clutch to the belt shaft.

Furthermore, it is suggested that the clutch comprises a ring-shaped gear wheel, which is arranged concentrically to the belt shaft, and the energy absorbing element is designed as a friction ring, which is arranged concentrically in a ring space between the gear wheel and the belt shaft. The advantage of this solution can be seen therein that a very compact design can be realized. Furthermore, no or at least as less as possible eccentric forces acting on the belt shaft are created, which would influence the rotational movement of the belt shaft negatively.

When using the friction ring, it is suggested further that the friction ring is clamped between a radial inner wall of the gear wheel and a radial outer wall of the belt shaft, so that only forces in circumferential direction are created and axial forces are prevented as far as possible.

The friction ring is preferably a closed ring with radially outwardly and/or inwardly directed deformation sections. The advantage of using a closed ring is that it can be designed with a very high strength in radial direction, since it may only be widened up or pressed together with elastic deformation of the material. Furthermore, frictional clamping forces can be generated with a very easy design when the ring comprises radially outwardly and/or inwardly directed deformation sections, which may be also pressed together to compensate deviations in the shape of the surfaces and in the orientation of the different parts towards each other. Furthermore the friction forces therefore preferably only act in circumferential direction as the pressing forces are directed only radially.

Furthermore, the energy absorbing element is designed preferably for an additional load limiting level of 1 kN pull-out force of the webbing, which is added to the load limiting level created by the load limiting device. In case the load limiting device is for example designed with a load limiting level of 2 kN a total pullout force of 3 kN can be realized. In case the load limiting device comprises a load limiting level of 5 kN the total load limiting level would be therefore 6 kN.

Furthermore the energy absorbing element may be also designed as an integral part of the belt shaft and/or of the clutch for example by providing at least one of the abutting surfaces with dents or protrusions.

Another preferred embodiment can be realized when the load limiting level caused by the energy absorbing element can be controlled by the electric actuator. The load limiting level can be controlled preferably continuously or stepwise in a depressive or progressive manner.

In the following the invention shall be illustrated on the basis of preferred embodiments with reference to the accompanying drawings, wherein:
- Fig. 1: shows a seatbelt retractor according to the invention in schematic view during the activation of the load limiting device; and
- Fig. 2: shows the same seatbelt retractor during activation of the load limiting device and additional load limiting caused by a friction element; and
- Fig. 3: shows a friction ring used as an energy absorbing element.

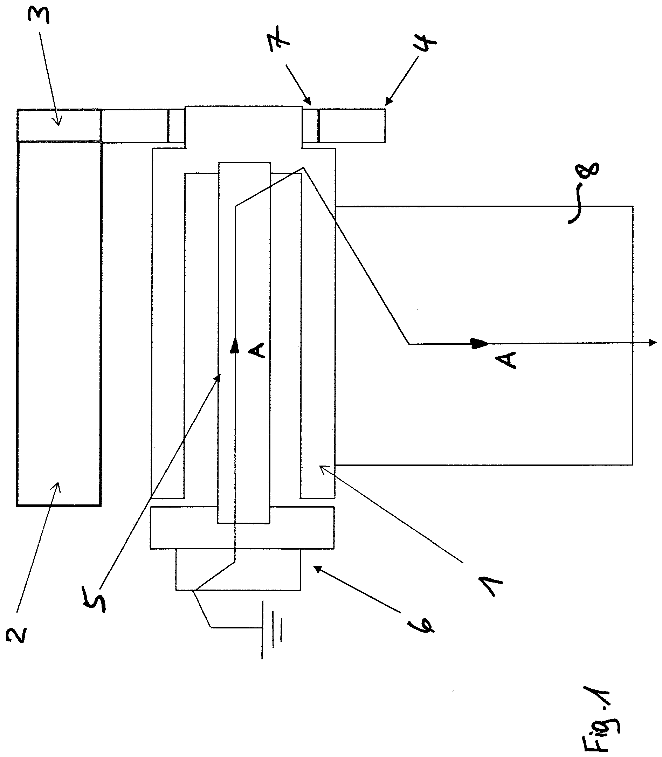

In Figure 1, it is shown a seatbelt retractor with a belt shaft 1 and a webbing 8, which is wound upon the belt shaft 1. The belt shaft 1 is arranged in a not shown housing, which is attachable at a vehicle structure. Furthermore, an electric actuator 2 in form of an electric motor is also fixed at the housing.

The belt shaft 1 is connected via a load limiting device 5 with a locking device 6. The locking device 6 is here realized by a locking pawl which is arranged at a tread head and can be actuated in a vehicle-sensitive and/or belt webbing-sensitive manner, by engaging the locking pawl into a toothing of the housing. The load limiting device 5 is realized by a torsion bar, which is fixed at one end with the tread head of the locking device 6 and with the other end with the belt shaft 1.

The electric motor comprises a shaft, which drives a drive wheel 3, which can be connected via a clutch 4 and an energy absorbing element 7 with the belt shaft 1. The clutch 4 is closed by friction when the electric motor drives the drive wheel 3 in a rotational direction, which would result in a rotation of the belt shaft 1 in upwinding direction of the webbing 8 onto the belt shaft 1 when the clutch 4 would be closed. The design of the electric motor, the drive wheel 3 and the clutch 4 or the gear mechanism in between may be designed like described in the WO 03/099619 A2 for example, which is incorporated to the disclosure of this application by reference.

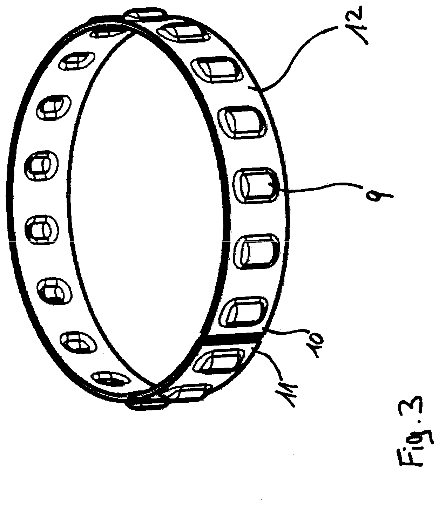

The energy absorbing element 7 is designed here as a closed friction ring 12 shown in Figure 3, which is arranged in a ring space between the belt shaft 1 and the clutch 4. The friction ring 12 is designed as a metal stamped ring with radially inwardly and/or outwardly directed dents or protrusions 9 which are abutting at the opposing radial walls of the belt shaft 1 and the clutch 4 and acting clamping forces between both parts. The friction ring 12 is made of a metal band, which is bent to a ring. Therefore, the friction ring 8 comprises two opposing free ends 10 and 11, and can be bent to a bigger radius or pressed together to a smaller radius for example to facilitate the assembly of the retractor.

In Figure 1, the load limiting device 5 is activated by activating in a first step the locking device 6 when the webbing pullout acceleration or the vehicle acceleration exceeds a predetermined value versus the housing of the retractor. When the pull-out force exceeds afterwards the load limiting level defined by the load limiting device 5, the load limiting device 5 is activated in a second step and the torsion bar is twisted plastically around its length axis under energy absorption. The plastic deformation of the torsion bar enables a rotational movement of the belt shaft 1 in unwinding direction and a pull-out of the webbing 8 with a limited pull-out force. The force flow during the activation of the load limiting device 5 is shown in Figure 1 by the arrow A. In this case the pull-out force is limited only by the load limiting device 5, which is for example 2 kN or 5 kN depending on the design of the load limiting device 5.

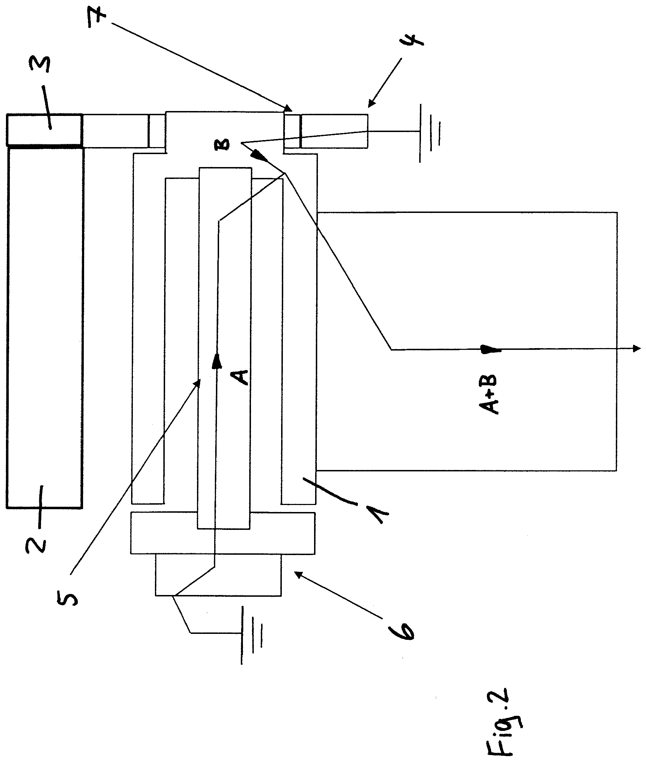

In Figure 2, it is shown a schematic view of the seatbelt retractor when the additional energy absorbing element 7 is activated. For the activation of the energy absorbing element 7 the electric actuator 2, which is here realized by an electric motor, drive the drive wheel 3. The clutch 4 is closed by the rotation of the drive wheel 3, which can be realized like described in the WO 03/099619 A2 with friction activated locking pawls, which are arranged at the drive wheel 3 and are pushed out by friction and/or by inertia forces. The movement of the locking pawls can be controlled by guiding channels on the drive wheel 3 or a guiding ring, which is arranged at the drive wheel 3. When the locking pawls engage into a toothing of another tooth ring of the clutch 4, the clutch 4 is closed, which means the drive wheel 3 and the tooth ring are connected by the locking pawls.

Between the not shown tooth ring and the belt shaft 1 is provided a ring space in which the energy absorbing element 7 is arranged. The energy absorbing element 7 is here designed as a friction ring 12 made as a metal stamped part like described above. The friction ring 12 is abutting with the dents or protrusions 9 at a radial outer surface of the belt shaft 1 and/or at a radial inner surface of the tooth ring, wherein the friction ring may 12 also only comprise dents or protrusions 9 to one of the radial directions, so it is abutting with the other side with a planar surface at the relevant part. In the present embodiment, the dents or protrusions 9 are only directed to the outside, so that the radial inner surface is designed as a planar surface. The friction ring 12 connects the tooth ring of the clutch 4 and the belt shaft 1 by creating a pressure force between the belt shaft 1 and the tooth ring of the clutch 4.

When the clutch 4 is closed, the tooth ring it is supported by the drive wheel 3 via the locking pawls engaging in the teeth of the tooth ring and the electric motor versus the housing of the seatbelt retractor and by the fixation at the vehicle also versus the vehicle, so that the tooth ring of the clutch 4 may not rotate, while the belt shaft 1 is rotating during the load limitation in unwinding direction. Because of this relative movement between the belt shaft 1 and the tooth ring the energy absorbing element 7 is loaded and absorbs energy by the friction forces. The energy absorbing element 7 is designed with pressure forces which result here in an additional load limiting level of 1 kN, wherein the energy absorbing element 7 may also be designed for a load limiting level between 0.1 and 4 kN dependent on the total load limiting level, which shall be realized. The force flow path is designated in Figure 2 with an arrow B. The energy absorbing element 7 acts in parallel to the load limiting device 5, so that the pull-out force during the load limitation is increased to a level of 6 kN, when the load limiting device 5 comprise a load limiting level of 5 kN, or to a level of 3 kN, when the load limiting device 5 comprise a load limiting level of 2 kN.

The clutch 4 is designed as a one direction clutch 4, which transmits only the rotational movement of the drive wheel 3 in a direction which is transmitted to a rotation of the belt shaft 1 in upwinding direction. The advantage is here that the tooth ring in the clutch 4 is supported against a rotation in unwinding direction of the belt shaft 1 when the belt shaft 1 rotates in unwinding direction, which is essential for the load limiting function, when the driving force is generated by the belt shaft 1. Furthermore, the clutch 4 is only transmitting driving forces from the electric motor in upwinding direction of the belt shaft, so that the electric motor may also be used as a pre-pretensioner to tension the webbing in a precrash phase. The energy absorbing element 7 which is designed here as a friction ring enables the transmission of torques for webbing forces up to 1 kN, which is here sufficient in the pre-pretensioning phase in which pull-in forces of approximately 150 to 250 N are applied. To avoid any losses during the pre-pretensioning phase it is important, that the load limiting level of the friction ring 12, in this case 1 kN, is higher than the pretensioning forces to be transmitted.

## Claims

1. Seatbelt retractor with a load limiting function having
- a housing for fixing the seatbelt retractor in a vehicle-fixed manner,
- a locking device (6) which can be actuated in a vehicle-sensitive and/or in a belt webbing-sensitive manner,
- a belt shaft (1), which is arranged in the housing and upon which the belt webbing can be wound,
- a load limiting device (5) located within the force flow between the locking device (6) and the belt shaft (1) for allowing a load-limited belt webbing extraction during the load limitation, and
- a switchable clutch (4),
**characterized in that**,
- at least one energy absorbing element (7) is provided in the force flow between the housing and the belt shaft (1), which is loaded when the clutch (4) is closed during the load-limited belt webbing extraction in parallel to the load limiting device (5) for increasing the load limiting level.

2. Seatbelt retractor according to claim 1, **characterized in that**,
- an electric actuator (2), preferably an electric motor is provided which closes the clutch (4) when activated.

3. Seatbelt retractor according to claim 2, **characterized in that**
- the clutch (4) is closed by friction created by a relative movement, which is initiated by the activation of the electric actuator (2).

4. Seatbelt retractor according to claim 2 or 3, **characterized in that**,
- the clutch (4) is a one direction clutch (4) which provides a support for the energy absorbing element (7) only when the belt shaft (1) is rotating in unwinding direction of the webbing (8).

5. Seatbelt retractor according to claim 3 and 4, **characterized in that**,
- the relative movement for closing the clutch (4) is a rotational movement of a drive wheel (3) driven by the electric actuator (2) in a direction which would result in an upwinding rotational movement of the belt shaft (1) when the clutch (4) is closed.

6. Seatbelt retractor according to anyone of the preceding claims, **characterized in that**
- the clutch (4) comprises a ring-shaped gear wheel, which is arranged concentrically to the belt shaft (1), and
- the energy absorbing element (7) is designed as a friction ring (12), which is arranged concentrically in a ring space between the gear wheel and the belt shaft (1).

7. Seatbelt retractor according to claim 6, **characterized in that**,
- the friction ring (12) is clamped between a radial inner wall of the gear wheel and a radial outer wall of the belt shaft (1).

8. Seatbelt retractor according to claim 7, **characterized in that**
- the friction ring (12) is a ring with radially outwardly and/or inwardly directed dents or protrusions (9) .

9. Seatbelt retractor according to anyone of the preceding claims, **characterized in that**
- the energy absorbing element (7) is designed for an additional load limiting level of 0.1 - 4 kN, preferably 1 kN pull-out force of the webbing (8), which is added to the load limiting level created by the load limiting device (5) .

10. Seatbelt retractor according to anyone of the preceding claims, **characterized in that**
- the energy absorbing element is an integral part of the belt shaft (1) and/or of the clutch (4).

11. Seatbelt retractor according to anyone of the preceding claims, **characterized in that**
- the load limiting level caused by the energy absorbing element (7) can be controlled by the electric actuator.

## Patentansprüche

1. Gurtaufroller mit einer Kraftbegrenzungsfunktion, der Folgendes aufweist:
- ein Gehäuse zum Fixieren des Gurtaufrollers auf eine fahrzeugfixierte Weise,
- eine Sperrvorrichtung (6), die auf das Fahrzeug reagierend und/oder auf das Gurtband reagierend betätigt werden kann,
- eine Gurtwelle (1), die im Gehäuse angeordnet ist und auf die das Gurtband gewickelt werden kann,
- eine Kraftbegrenzungsvorrichtung (5), die in dem Kraftfluss zwischen der Sperrvorrichtung (6) und der Gurtwelle (1) angeordnet ist, damit sie während der Kraftbegrenzung ein kraftbegrenztes Herausziehen des Gurtbands zulässt, und
- eine schaltbare Kupplung (4),
**dadurch gekennzeichnet, dass**
- mindestens ein Energieabsorptionselement (7) im Kraftfluss zwischen dem Gehäuse und der Gurtwelle (1) vorgesehen ist, das parallel zur Kraftbegrenzungsvorrichtung (5) zwecks Erhöhung der Kraftbegrenzungshöhe gespannt wird, wenn die Kupplung (4) während des kraftbegrenzten Herausziehens des Gurtbands geschlossen wird.

2. Gurtaufroller nach Anspruch 1, **dadurch gekennzeichnet, dass**
- ein elektrischer Aktor (2), vorzugsweise ein Elektromotor, vorgesehen ist, der die Kupplung (4) schließt, wenn er eingeschaltet wird.

3. Gurtaufroller nach Anspruch 2, **dadurch gekennzeichnet, dass**
- die Kupplung (4) durch Reibung geschlossen wird, die durch eine Relativbewegung erzeugt wird, die durch Einschalten des elektrischen Aktors (2) ausgelöst wird.

4. Gurtaufroller nach Anspruch 2 oder 3, **dadurch gekennzeichnet, dass**
- die Kupplung (4) eine in einer Richtung wirkende Kupplung (4) ist, die nur dann das Energieabsorptionselement (7) unterstützt, wenn sich die Gurtwelle (1) in der Abwickelrichtung des Bands (8) dreht.

5. Gurtaufroller nach Anspruch 3 und 4, **dadurch gekennzeichnet, dass**
- die Relativbewegung zum Schließen der Kupplung (4) eine Drehbewegung eines von dem elektrischen Aktor (2) angetriebenen Antriebsrads (3) in eine Richtung ist, die eine Aufwickeldrehbewegung der Gurtwelle (1) bewirken würde, wenn die Kupplung (4) geschlossen wird.

6. Gurtaufroller nach einem der vorhergehenden Ansprüche, **dadurch gekennzeichnet, dass**
- die Kupplung (4) ein ringförmiges Zahnrad ist, das konzentrisch zur Gurtwelle (1) angeordnet ist, und
- das Energieabsorptionselement (7) als Reibring (12) ausgestaltet ist, der konzentrisch in einem Ringraum zwischen dem Zahnrad und der Gurtwelle (1) angeordnet ist.

7. Gurtaufroller nach Anspruch 6, **dadurch gekennzeichnet, dass**
- der Reibring (12) zwischen einer radialen Innenwand des Zahnrads und einer radialen Außenwand der Gurtwelle (1) festgeklemmt ist.

8. Gurtaufroller nach Anspruch 7, **dadurch gekennzeichnet, dass**
- der Reibring (12) ein Ring mit radial nach außen und/oder nach innen gerichteten Aus- bzw. Einbuchtungen oder Vorsprüngen (9) ist.

9. Gurtaufroller nach einem der vorhergehenden Ansprüche, **dadurch gekennzeichnet, dass**
- das Energieabsorptionselement (7) für eine zusätzliche Kraftbegrenzungshöhe von 0,1 bis 4 kN, vorzugsweise 1 kN Ausziehkraft des Bands (8) ausgestaltet ist, die zu der Kraftbegrenzungshöhe hinzukommt, die von der Kraftbegrenzungsvorrichtung (5) erzeugt wird.

10. Gurtaufroller nach einem der vorhergehenden Ansprüche, **dadurch gekennzeichnet, dass**
- das Energieabsorptionselement ein wesentlicher Bestandteil der Gurtwelle (1) und/oder der Kupplung (4) ist.

11. Gurtaufroller nach einem der vorhergehenden Ansprüche, **dadurch gekennzeichnet, dass**
- die Kraftbegrenzungshöhe, die von dem Energieabsorptionselement (7) verursacht wird, mit dem elektrischen Aktor gesteuert werden kann.

## Revendications

1. Rétracteur de ceinture de sécurité à fonction de limitation de charge, présentant
- un boîtier destiné à fixer le rétracteur de ceinture de sécurité de manière fixe par rapport au véhicule,
- un dispositif de blocage (6) pouvant être actionné d'une façon sensible au véhicule et/ou sensible à la sangle de ceinture,
- un arbre à ceinture (1) agencé dans le boîtier et sur lequel la sangle de ceinture peut être enroulée,
- un dispositif de limitation de charge (5) situé sur le trajet emprunté par la force entre le dispositif de blocage (6) et l'arbre à ceinture (1), en vue d'une extraction de la sangle de ceinture avec limitation de charge pendant la limitation de charge, et
- un embrayage (4) susceptible d'être embrayé et débrayé,
**caractérisé en ce que**
- au moins un élément absorbeur d'énergie (7) est prévu sur le trajet emprunté par la force entre le boîtier et l'arbre à ceinture (1), lequel élément subit une charge, parallèlement au dispositif de limitation de charge (5), lorsque l'embrayage (4) est enclenché pendant l'extraction de la sangle de ceinture avec limitation de charge, afin d'accroître le taux de limitation de charge.

2. Rétracteur de ceinture de sécurité selon la revendication 1, **caractérisé en ce que**
- il est prévu un actionneur électrique (2), de préférence un moteur électrique, qui enclenche l'embrayage (4) lorsqu'il est activé.

3. Rétracteur de ceinture de sécurité selon la revendication 2, **caractérisé en ce que**
- l'embrayage (4) est enclenché sous l'effet du frottement créé par un mouvement relatif amorcé par l'activation de l'actionneur électrique (2).

4. Rétracteur de ceinture de sécurité selon la revendication 2 ou 3, **caractérisé en ce que**
- l'embrayage (4) est un embrayage (4) unidirectionnel qui assure un support pour l'élément absorbeur d'énergie (7) uniquement lorsque l'arbre à ceinture (1) tourne dans le sens du déroulement de la sangle (8).

5. Rétracteur de ceinture de sécurité selon les revendications 3 et 4, **caractérisé en ce que**
- le mouvement relatif visant à enclencher l'embrayage (4) est un mouvement de rotation d'une roue motrice (3), entraînée par l'actionneur électrique (2), dans un sens occasionnant un mouvement de rotation à effet d'enroulement de l'arbre à ceinture (1) lorsque l'embrayage (4) est enclenché.

6. Rétracteur de ceinture de sécurité selon l'une quelconque des revendications précédentes, **caractérisé en ce que**
- l'embrayage (4) comprend une roue dentée de forme annulaire agencée concentriquement à l'arbre à ceinture (1), et
- l'élément absorbeur d'énergie (7) est conçu sous la forme d'un anneau de friction (12) agencé concentriquement dans un espace annulaire entre la roue dentée et l'arbre à ceinture (1).

7. Rétracteur de ceinture de sécurité selon la revendication 6, **caractérisé en ce que**
- l'anneau de friction (12) est pris entre une paroi radiale intérieure de la roue dentée et une paroi radiale extérieure de l'arbre à ceinture (1).

8. Rétracteur de ceinture de sécurité selon la revendication 7, **caractérisé en ce que**
- l'anneau de friction (12) est un anneau doté de bosselures ou saillies (9) orientées radialement vers l'extérieur et/ou vers l'intérieur.

9. Rétracteur de ceinture de sécurité selon l'une quelconque des revendications précédentes, **caractérisé en ce que**
- l'élément absorbeur d'énergie (7) est conçu pour fournir un taux de limitation de charge supplémentaire, allant de 0,1 à 4 kN, en étant de préférence de 1 kN, relativement à la force d'extraction de la sangle (8), qui s'ajoute au taux de limitation de charge créé par le dispositif de limitation de charge (5).

10. Rétracteur de ceinture de sécurité selon l'une quelconque des revendications précédentes, **caractérisé en ce que**
- l'élément absorbeur d'énergie fait partie intégrante de l'arbre à ceinture (1) et/ou de l'embrayage (4).

11. Rétracteur de ceinture de sécurité selon l'une quelconque des revendications précédentes, **caractérisé en ce que**
- le taux de limitation de charge assuré par l'élément absorbeur d'énergie (7) peut être contrôlé par l'actionneur électrique.
